# EUROPÄISCHE PATENTSCHRIFT

(11) **EP 2 689 503 B1**
(45) Veröffentlichungstag und Bekanntmachung des Hinweises auf die Patenterteilung: **26.09.2018**
(21) Anmeldenummer: 12721790.9
(22) Anmeldetag: 03.05.2012
(51) Int. Cl.: H02B 11/02, H01H 71/02

(54) **STEUERGERÄT SOWIE VERFAHREN ZUM BETRIEB EINES SOLCHEN STEUERGERÄTS**
CONTROL DEVICE AND METHOD FOR OPERATING SUCH A CONTROL DEVICE
APPAREIL DE COMMANDE ET PROCÉDÉ PERMETTANT DE FAIRE FONCTIONNER UN TEL APPAREIL DE COMMANDE

(30) Priorität: 18.05.2011 DE 102011076045
(43) Veröffentlichungstag der Anmeldung: 29.01.2014
(73) Patentinhaber: Siemens Aktiengesellschaft, 80333 München (DE)
(72) Erfinder: BÖMOSER, Stefan, 91522 Ansbach (DE); PRÖLSS, Manfred, 92263 Ebermannsdorf (DE)
(86) Internationale Anmeldenummer: PCT/EP2012/058132
(87) Internationale Veröffentlichungsnummer: WO 2012/156207

(56) Entgegenhaltungen:
- EP-A1- 1 950 399
- EP-A1- 2 031 625
- EP-A1- 2 031 626
- DE-A1-102010 032 033

## Beschreibung

Die vorliegende Erfindung betrifft eine elektrische Schaltanlage mit mehreren über ein Bussystem miteinander verbundenen Steuergeräten, die jeweils als Einschubmodul zum Einschub in einen von mehreren Einschubschächten der elektrischen Schaltanlage ausgeführt sind. Die Steuergeräte sind als Einschubmodul zum Einschub in einen Einschubschacht, z.B. einer Anlage oder eines Geräts, ausgeführt und den Einschubschächten ist je nach Auslegung eine oder keine Speichereinrichtung zum Speichern von Konfigurationsdaten und/oder Betriebsparametern des Steuergerätes bzw. des elektrischen Verbrauchers zugeordnet ist. Darüber hinaus betrifft die Erfindung ein zugehöriges Verfahren zum Betrieb eines solchen Steuergeräts.

Aus dem Stand der Technik sind Schaltanlagen in Einschubtechnik bekannt. Diese weisen für die einzelnen Abgänge Einschübe (Einschubmodule) auf, welche die entsprechenden Schutz- und Steuergeräte für angeschlossene Verbraucher enthalten. Diese Schutz- und Steuergeräte sind zunehmend in einem parametrierbaren ("intelligenten") Gerät integriert, welches zugleich eine Kommunikationsschnittstelle zu einem übergeordneten Steuerungssystem aufweist. Die Geräte kommunizieren über ein Feldbus-System, wie beispielsweise PROFIBUS, oder ein anderes, vorzugsweise nach dem Industrial Ethernet-Standard arbeitenden Kommunikationsnetzwerk, wie beispielsweise PROFI-NET, und werden innerhalb dieses Systems bzw. Netzwerkes über eine eineindeutige Adresse identifiziert. Diese Kommunikationsadresse wird in Form eines Parameters, z.B. mit Hilfe einer Software direkt in dem Gerät eingestellt.

Die Parameter und somit auch die Adresse werden im Gerät selbst gespeichert. Hierzu dient entweder eine austauschbare Speichereinrichtung, die als Ladespeicher zusätzlich zu dem eigentlichen Gerätespeicher vorgesehen ist, beispielsweise in Form eines Speicherbausteins, einer Speicherkarte od.dgl., oder aber die Parametrisierung des Gerätes erfolgt über eine Software bzw. mit Hilfe eines so genannten Adressiersteckers. Die Parameter werden dann während des Anlaufs des Gerätes von dem Adressierstecker oder der Speichereinrichtung automatisch übernommen.

Die noch unveröffentlichte deutsche Patentanmeldung 10 2010 032 033.1 offenbart ein Steuergerät einer elektrischen Niederspannungs-Schaltanlage. Wird das als Einschubmodul ausgeführte Steuergerät in den Einschubschacht eingeschoben, werden automatisch beim Kontaktieren die in der Speichereinrichtung abgespeicherten Konfigurationsdaten und/oder Betriebsparameter des Steuergerätes bzw. des elektrischen Verbrauchers in das Steuergerät eingelesen. Damit wird sichergestellt, dass ein Einschubmodul bzw. das zugehörige Steuergerät, das z.B. ein Motor-Management-System sein kann, immer automatisch die für diesen Einschubschacht vorgesehene Busadresse und Parameterdaten bekommt.

Es muss dafür gesorgt werden, dass die Speichereinrichtung beim Einschalten immer eingelesen wird. Sollte ein Fehler in der Speichereinrichtung oder in der Verbindung zwischen der Speichereinrichtung und dem Steuergerät vorliegen, und können die Daten nicht eingelesen werden, muss das Steuergerät eine Störung auslösen, z.B. "Speichereinrichtung nicht vorhanden", und darf nicht anlaufen.

Allerdings soll diese beschriebene Funktion nur für einen Teil der Applikationen verwendet werden. Für die anderen Applikationen gilt, dass gemäß dem bisherigen Stand der Technik keine Speichereinrichtung vorhanden ist und die Daten im Steuergerät abgespeichert sind und beim Einschalten aktiviert werden. Damit sind die Daten dem Einschubmodul und nicht dem Einschubschacht zugeordnet. Der Anwender muss vor dem Kontaktieren des Einschubs sicherstellen, dass die korrekten Daten im Steuergerät geladen sind. In dieser Betriebsart darf das Steuergerät keine Störung "Speichereinrichtung nicht vorhanden" anzeigen.

EP 2 031 625 A1 zeigt ein Verfahren zum Erkennen von Komponenten in einer elektrischen Niederspannungs-Schaltanlage. Die elektrische Niederspannungs-Schaltanlage weist dazu wenigstens ein in einem Einschubschacht positionierbares Einschubmodul auf, wobei sowohl dem Einschubschacht als auch dem Einschubmodul Einrichtungen zur drahtlosen Kommunikation zugeordnet sind, wobei die Kommunikationseinrichtungen zum Senden und/oder Empfangen von Daten ausgebildet sind, die für eine automatische Erkennung des Einschubschachtes und/oder des Einschubmoduls relevant sind, und eine automatische Zuordnung dieser Komponenten zueinander ermöglichen.

Der Erfindung liegt die Aufgabe zugrunde, ein Steuergerät der oben genannten Art und ein zugehöriges Verfahren vorzuschlagen, das das Anlaufen des Steuergeräts mit und ohne Speichereinrichtung ermöglicht.

Die erste Aufgabe wird durch eine elektrische Niederspannungs-Schaltanlage mit den Merkmalen nach Anspruch 1 gelöst. Dabei weist das Steuergerät folgende Merkmale auf:
a) Das Steuergerät weist erste Mittel zur Überprüfung beim Einsteckvorgang in einen der Einschubschächte auf ob eine Speichereinrichtung vorhanden ist oder nicht,
b) das Steuergerät weist zweite Mittel zur Realisierung der Funktion auf, das derart ausgebildet ist, dass bei vorhandener Speichereinrichtung die darin gespeicherten Parameter und Daten für den Betrieb des Steuergeräts eingelesen werden und bei nicht vorhandener Speichereinrichtung kein Anlauf erfolgt,
c) wobei die Teilfunktion, dass bei nicht vorhandener Speichereinrichtung kein Anlauf erfolgt, ist deaktivierbar.

Eine vorteilhafte Weiterbildung der Erfindung besteht, wenn das Steuergerät gemäß Anspruch 2 ein Motormanagement-Gerät ist.

Besonders vorteilhaft ist es außerdem, wenn gemäß Anspruch 3 für den ersten Einsatz das Steuergerät mit Standardparametern voreingestellt und die Funktion, dass bei nicht vorhandener Speichereinrichtung kein Anlauf erfolgt, deaktiviert ist.

Die das Verfahren betreffende Aufgabe wird mit den Merkmalen nach Anspruch 4 gelöst. Dabei weist das Verfahren folgende Merkmale auf:
a) Das Steuergerät prüft bei jedem Einschaltvorgang, ob eine Speichereinrichtung vorhanden ist oder nicht,
b) bei vorhandener Speichereinrichtung werden die darin gespeicherten Parameter und Daten in das Steuergerät eingelesen,
c) das Steuergerät weist eine deaktivierbare Funktion auf, dass bei nicht vorhandener Speichereinrichtung kein Anlauf erfolgt.

Besonders vorteilhaft ist es, wenn gemäß Anspruch 5 das Steuergerät beim ersten Einsatz mit voreingestellten Standardparametern anläuft, wenn keine Speichereinrichtung vorhanden ist, wobei die Funktion, dass bei nicht vorhandener Speichereinrichtung kein Anlauf erfolgt, deaktiviert ist.

Eine weitere vorteilhafte Ausführung das Verfahren gilt, wenn gemäß Anspruch 6 bei Vorhandensein einer Speichereinrichtung die darin gespeicherten Parameter und Daten in das Steuergerät eingelesen werden und falls die Funktion, dass bei nicht vorhandener Speichereinrichtung kein Anlauf erfolgt, noch nicht aktiviert ist diese aktiviert wird.

Unter dem Begriff "Steuergerät" werden Schutzgeräte, Steuergeräte sowie kombinierte Schutz- und Steuergeräte verstanden, wie sie in Schaltanlagen üblicherweise in Verbindung mit elektrischen Verbrauchern angeschlossen und verwendet werden.

Unter dem Begriff "Einschubschacht" wird allgemein und unabhängig von dessen konkreter konstruktiver Ausgestaltung der Aufnahme- bzw. Montageort des Einschubmoduls, z.B. in einer Schaltanlage, verstanden. Der Einschubschacht kann also ein Halterahmen oder dergleichen sein.

Unter dem Begriff "Einschubmodul" wird eine aus dem Einschubschacht herausnehmbare, austauschbare Funktionseinheit des Abgangs verstanden. Dabei kann es sich um ein unter Anwendung der Einschubtechnik verwendbares Einschubmodul handeln, welches nach dem Platzieren in dem Einschubschacht und dem sich anschließenden Kontaktieren des Kontaktsatzes über eine elektrische Verbindung zu dem feststehenden Teil der Schaltanlage verfügt. Alternativ dazu handelt es sich bei der Funktionseinheit um eine andere, austauschbare Funktionseinheit, beispielsweise um ein unter Anwendung der Stecktechnik verwendbares Steckmodul, bei welchem der Kontaktsatz bei dem Platzieren automatisch kontaktiert und damit das Steckmodul aktiviert wird.

Ein Ausführungsbeispiel der Erfindung wird nachfolgend anhand der Zeichnungen näher erläutert. Hierbei zeigt:

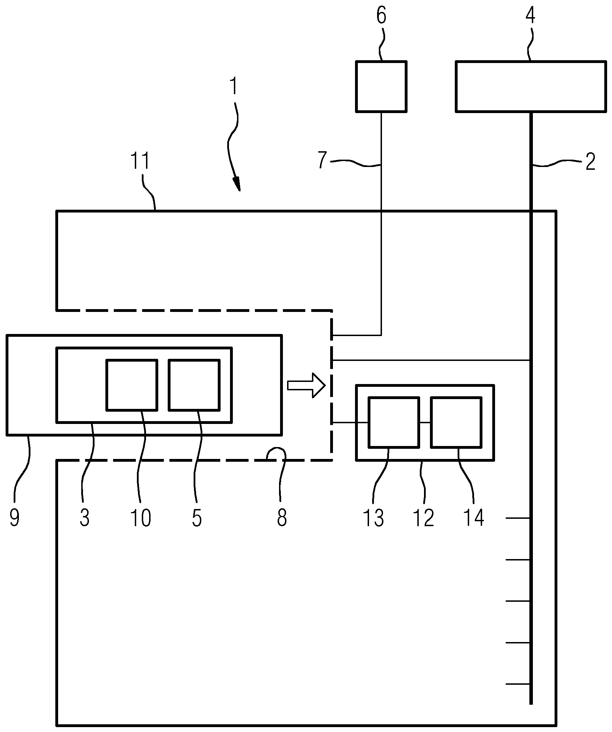

- FIG 1: eine schematische Darstellung einer Schaltanlage mit einem erfindungsgemäßen Steuergerät.

Die elektrische Niederspannungs-Schaltanlage 1 weist eine Mehrzahl von über ein Bussystem 2 miteinander verbundenen Steuergeräten 3, beispielsweise Antriebsteuergeräte, auf. Bei dem Bussystem 2 handelt es sich um einen in der Automatisierungs- und Fertigungstechnik weit verbreiteten standardisierten Feldbus, wie PROFIBUS.

Zur Anbindung an eine übergeordnete Steuerungsebene, beispielsweise die Steuerzentrale der Schaltanlage 1, ist die Schaltanlage 1 dabei über das Bussystem 2 mit einem externen Leittechnikrechner 4 als Busmaster zur Steuerung der als Slaves dienenden Steuergeräte 3 verbunden. Zwischen dem Leittechnikrechner 4 und den jeweiligen Steuergeräten 3 werden Prozessdaten ausgetauscht. Bei den Prozessdaten handelt es sich insbesondere um Daten zum Einstellen, Steuern, Regeln und/oder Überwachen der Steuergeräte 3. Sie können auch Prozessparameter oder Konfigurationsdaten umfassen, um entsprechende Änderungen im betrieblichen Verhalten der Steuergeräte 3 zu bewirken.

Die Steuergeräte 3 sind parametrierbar und verfügen für die Kommunikation mit der übergeordneten Steuerungsebene, hier dem Leittechnikrechner 4, über das Bussystem 2 über eine Kommunikationsschnittstelle 5, so dass sie auch als "intelligente" Geräte bezeichnet werden. Die Kommunikationsschnittstelle 5 jedes Steuergerätes 3 umfasst beispielsweise eine Sende- und/oder Empfangseinheit. Je nach verwendeter Übertragungstechnologie können dabei die unterschiedlichsten Komponenten zum Einsatz kommen.

Die Steuergeräte 3 sind im montierten ("gesteckten") Zustand mit außerhalb der Schaltanlage 2 angeordneten elektrischen Verbrauchern 6 verbunden, die über Anschlussleitungen 7 fest mit den jeweiligen Einschubschächten 8 der Schaltanlage 2 verbunden sind. Die Steuergeräte 3 dienen beispielsweise dazu, Motoren in industriellen Prozessen zu schalten und zu schützen. Die Steuergeräte 3 sind in der so genannten "Einschubtechnik" in Einschubmodulen 9 (Einschüben) untergebracht. Die Einschubmodule 9 lassen sich nach Art von Schubkästen in entsprechend vorgesehene Einschubschächte 8 eines Schaltschrankes 11 positionieren.

Der Übersichtlichkeit halber ist in FIG 1 lediglich ein einziges Einschubmodul 9 mit einem Steuergerät 3 und ein einziger Einschubschacht 8 des Schaltschrankes 11 dargestellt.

Solange ein Steuergerät 3 nicht parametriert ist, also zumindest eine Busadresse zugewiesen bekommen hat, funktioniert das in einem Einschubschacht 8 platzierte Einschubmodul 9 nicht oder nur eingeschränkt. Erst die Zuweisung einer eineindeutigen Kommunikationsadresse ermöglicht die Kommunikation innerhalb des Bussystems 2.

Die Schaltanlage 1 gemäß FIG 1 umfasst eine Mehrzahl von Speichereinrichtungen 12 zum Speichern von Konfigurationsdaten und/oder Betriebsparametern der Steuergeräte 3 bzw. der elektrischen Verbraucher 6.

Diese Speichereinrichtungen 12 können, aber müssen nicht in den Einschubmodulen 9 integriert sein. Im dargestellten Ausführungsbeispiel sind sie in den Einschubschächten 8 platziert. Mit anderen Worten weisen hier nicht die Einschubmodule 9, sondern die Einschubschächte 8 die Speichereinrichtungen 12 auf. In FIG 1 ist die Speichereinrichtung 12 aus Gründen der Übersichtlichkeit nicht in dem Einschubschacht 8, sondern an den Einschubschacht angrenzend abgebildet.

Die Speichereinrichtung 12 umfasst neben dem eigentlichen Speicherbaustein 14 eine Kommunikationsschnittstelle 13. Bei dem Speicherbaustein 14 handelt es sich beispielsweise um eine Speicherkarte, wie sie beispielsweise auch in digitalen Kameras verwendet wird.

Die Kommunikationsschnittstelle 13 dient der Kommunikation mit dem Steuergerät 3. Zu diesem Zweck verfügt das Steuergerät 3 zusätzlich zu der Kommunikationsschnittstelle 5 für die Kommunikation mit der Leittechnik über eine weitere Kommunikationsschnittstelle 10 für die Kommunikation mit der Speichereinrichtung 12.

Sowohl die Kommunikationsschnittstelle 13 der Speichereinrichtung 12, als auch die Kommunikationsschnittstelle 10 des Steuergerätes 3 umfassen beispielsweise eine Sende- und/oder Empfangseinheit, wobei wiederum, je nach verwendeter Übertragungstechnologie, die unterschiedlichsten Komponenten zum Einsatz kommen können. Wichtig ist, dass die dem Einschubschacht 8 zugeordnete Kommunikationsschnittstelle 13 der Speichereinrichtung 12 mit der Kommunikationsschnittstelle 10 des Steuergerätes 3 kommunizieren und die notwendigen Daten übertragen bzw. austauschen kann. Dabei kann es sich um eine Datenübertragung von der Speichereinrichtung 12 zu dem Steuergerät 3, aber auch um eine Datenübertragung von dem Steuergerät 3 zu der Speichereinrichtung 12 handeln.

Die Kommunikation des Steuergerätes 3 mit dem Leittechnikrechner 4 über die Kommunikationsschnittstelle 5 ist dabei unabhängig von der Kommunikation des Steuergerätes 3 mit der Speichereinrichtung 12 über die Kommunikationsschnittstelle 10. Es erfolgt zudem keine direkte Kommunikation zwischen der Speichereinrichtung 12 und dem Leittechnikrechner 4, sondern eine solche Kommunikation erfolgt stets über das Steuergerät 3.

Die in der Speichereinrichtung 12 gespeicherten Konfigurationsdaten und/oder Betriebsparameter umfassen nicht nur Betriebsparameter, insbesondere funktionale Parameter und Schutzeinstellungen, sondern auch für die Kommunikation relevante Informationen, insbesondere Adressdaten.

Außerdem sind in der Speichereinrichtung 12 weitere Identifikationsparameter gespeichert, die neben oder zusätzlich zu der Adresse eine Identifizierung des Steuergerätes 3 ermöglichen, z.B. Angaben darüber, in welchem Feld der Schaltanlage 1 bzw. an welcher Einbauplatzposition das jeweilige Einschubmodul 9 platziert ist. Diese Art von zusätzlichen Informationen dient beispielsweise dazu, Angaben über das Steuergerät 3 außenstehenden Dritten, beispielsweise Service-Technikern, über die Leittechnik sichtbar zu machen, damit diese eine Bewertung der Busadresse, beispielsweise hinsichtlich ihres Einbauplatzes, vornehmen können. Neben der Einbauplatzposition können das beispielsweise auch die Abgangsbezeichnungen der angeschlossenen elektrischen Verbraucher 6 (z.B. Motoren) sein.

Eine automatische Parametrierung des Einschubmoduls 9 erfolgt vorzugsweise während der Platzierung bzw. Aktivierung des Einschubmoduls 9 in dem Einschubschacht 8, also in einem direkten zeitlichen Zusammenhang mit dem Einsteckvorgang. Damit wird sichergestellt, dass die Parametrierung des Steuergerätes 3, insbesondere das Zuordnen einer Busadresse, sowie das Erkennen des Einschubmoduls 9, dessen korrekte Einbindung in das Schaltanlagenfeld und eine sich gegebenenfalls anschließende Freigabe bzw. Nichtfreigabe des Betriebs des Einschubmoduls 9 zeitnah und in jedem Fall vor dem Einschalten des Abgangs erfolgt.

Damit wird die korrekte Adressierung und Parametrierung eines intelligenten Steuergerätes 3 nach einem Tausch eines Einschubmoduls 9 gewährleistet, wobei die Adressierung und Parametrierung automatisch und mit einem geringen Fehlerrisiko erfolgt. Weiterhin wird sichergestellt, dass nach einem Wechsel eines Einschubmoduls 9 der Einschubschacht 8 eindeutig identifiziert wird, dass die richtige Adresse eingestellt wird und dass die richtigen Parameter übertragen werden. Ohne Vorhandensein einer Speichereinrichtung 12 würde kein Einlesen der hinterlegten Daten in das Steuergerät 3 erfolgen können. Es läge ein gestörter Zustand vor, der dem Benutzer z.B. durch eine Ausgabe "kein Anlauf ohne Speichereinrichtung" angezeigt würde.

Die Erfindung soll aber nicht nur den Betrieb solcher Schaltanlagen 1 mit einer Speichereinrichtung 12 gemäß FIG 1, sondern auch Applikationen ohne eine Speichereinrichtung 12 ermöglichen.

Um beide Betriebsarten zu ermöglichen, wird das Steuergerät 3 im Auslieferungszustand mit Standard-Parametern voreingestellt, die beim Einschalten keine gefährlichen Zustände für den Verbraucher 6 zur Folge haben, so dass zumindest ein Anlauf ohne Speichereinrichtung 12 möglich ist. Das Steuergerät 3 weist erste Mittel zur elektrischen Überprüfung bei jedem Einschaltvorgang auf, ob eine Speichereinrichtung 12 vorhanden ist oder nicht. Weiterhin weist das Steuergerät 3 zweite Mittel zur Realisierung der Funktion auf, dass bei vorhandener Speichereinrichtung 12 die darin gespeicherten Parameter und Daten für den Betrieb des Steuergeräts eingelesen werden und bei nicht vorhandener Speichereinrichtung 12 kein Anlauf erfolgt.

Diese Funktion des Steuergeräts 3, dass bei nicht vorhandener Speichereinrichtung kein Anlauf erfolgt, ist im Auslieferungszustand deaktiviert, so dass bei Nichtvorhandensein einer Speichereinrichtung 12 das Steuergerät 3 mit seinen voreingestellten Standard-Parametern beim ersten Einsatz betrieben werden kann. Würde aber durch die Prüfung das Vorhandensein einer Speichereinrichtung 12 erkannt werden, würden deren hinterlegte Daten automatisch eingelesen werden und zugleich die Funktion "kein Anlauf ohne Speichereinrichtung" aktiviert werden. Damit muss die Speichereinrichtung 12 von nun an bei jedem Einschalten vorhanden sein. Die Überwachung wird zusammen mit der Übernahme von Daten aktiviert, die in einem falschen Einschubschacht 8 zu unerwünschten Zuständen führen können.

Durch ein Zurücksetzen des Steuergeräts 3, d.h. des Motormanagement-Systems in den Auslieferungszustand kann die Funktion "kein Anlauf ohne Speichereinrichtung" wieder deaktiviert werden.

Somit ermöglicht die Erfindung den Betrieb mit und ohne eine Speichereinrichtung 12. Bei Betrieb mit einer Speichereinrichtung 12 ist sichergestellt, dass das Vorhandensein der Speichereinrichtung 12 überwacht wird und die entsprechenden Adressen als auch Parameterdaten sicher in das Steuergerät 3 geladen werden. Eine Fehlbedienung sowie falsche Adress- und Parameterdaten im Steuergerät 3 werden damit wirksam unterbunden.

## Patentansprüche

1. Elektrische Schaltanlage (1) mit mehreren über ein Bussystem (2) miteinander verbundenen Steuergeräten (3), die jeweils als Einschubmodul (9) zum Einschub in einen von mehreren Einschubschächten (8) der elektrischen Schaltanlage (1) ausgeführt sind, **dadurch gekennzeichnet, dass** einem oder mehreren der Einschubschächte (8) eine oder keine Speichereinrichtung (12) zum Speichern von Konfigurationsdaten und/oder Betriebsparametern des Steuergerätes (3) bzw. des elektrischen Verbrauchers (6) zugeordnet ist, mit folgenden Merkmalen:
a) die Steuergeräte (3) weisen jeweils erste Mittel zur Überprüfung beim Einsteckvorgang in einen der Einschubschächte (8) auf, ob dem betreffenden Einschubschacht (8) eine Speichereinrichtung (12) zugeordnet ist,
b) die Steuergeräte (3) weisen zweite Mittel zur Realisierung einer Funktion auf, die derart ausgebildet ist, dass bei vorhandener Speichereinrichtung (12) die darin gespeicherten Parameter und Daten für den Betrieb des Steuergeräts (3) eingelesen werden und bei nicht vorhandener Speichereinrichtung (12) kein Anlauf erfolgt,
c) wobei die Teilfunktion, dass bei nicht vorhandener Speichereinrichtung (12) kein Anlauf erfolgt, deaktivierbar ist.

2. Elektrische Schaltanlage (1) nach Anspruch 1, **dadurch gekennzeichnet, dass** das Steuergerät (3) ein Motormanagement-Gerät ist.

3. Elektrische Schaltanlage (1) nach Anspruch 1 oder 2, **dadurch gekennzeichnet, dass** für den ersten Einsatz das Steuergerät (3) mit Standardparametern voreingestellt und die Teilfunktion, dass bei nicht vorhandener Speichereinrichtung (12) kein Anlauf erfolgt, deaktiviert ist.

4. Verfahren zum Betrieb einer elektrischen Schaltanlage (1) mit mehreren über ein Bussystem (2) miteinander verbundenen Steuergeräten (3), die jeweils als Einschubmodul (9) zum Einschub in einen von mehreren Einschubschächten (8) der elektrischen Schaltanlage (1) ausgeführt sind, wobei einem oder mehreren der Einschubschächte (8) je nach Auslegung eine oder keine Speichereinrichtung (12) zum Speichern von Konfigurationsdaten und/oder Betriebsparametern des Steuergerätes bzw. eines elektrischen Verbrauchers (6) zugeordnet ist, mit folgenden Merkmalen:
a) die Steuergeräte (3) prüfen jeweils bei jedem Einschaltvorgang, ob eine Speichereinrichtung (12) vorhanden ist oder nicht,
b) bei vorhandener Speichereinrichtung (12) werden die darin gespeicherten Parameter und Daten in das zugeordnete Steuergerät (3) eingelesen,
c) das Steuergerät (3) weist eine deaktivierbare Funktion auf, dass bei nicht vorhandener Speichereinrichtung (12) kein Anlauf erfolgt.

5. Verfahren nach Anspruch 4, **dadurch gekennzeichnet, dass** die Steuergeräte (3) beim ersten Einsatz mit voreingestellten Standardparametern anlaufen, wenn keine Speichereinrichtung (12) vorhanden ist, wobei die Funktion, dass bei nicht vorhandener Speichereinrichtung (12) kein Anlauf erfolgt, deaktiviert ist.

6. Verfahren nach Anspruch 4 oder 5, **dadurch gekennzeichnet, dass** bei Vorhandensein einer Speichereinrichtung (12) die darin gespeicherten Parameter und Daten in das zugeordnete Steuergerät (3) eingelesen werden und falls die Funktion, dass bei nicht vorhandener Speichereinrichtung (12) kein Anlauf erfolgt, noch nicht aktiviert ist diese aktiviert wird.

## Claims

1. Electrical switchgear (1) having a plurality of control devices (3) which are connected to one another via a bus system (2) and which are each designed as an insert module (9) for inserting into one of a plurality of insert shafts (8) of the electrical switchgear (1), **characterised in that** one or no storage device (12) for storing configuration data and/or operating parameters of the control device (3) or of the electric load (6) is associated with one or a plurality of the insert shafts (8), having the following features:
a) the control devices (3) each have first means for checking during the insertion operation into one of the insert shafts (8) whether a storage device (12) is associated with the insert shaft (8) in question,
b) the control devices (3) have second means for implementing a function, which is designed such that if a storage device (12) is present, the parameters and data stored therein for the operation of the control device (3) are read in, and if no storage device (12) is present no start-up is carried out,
c) wherein the subfunction of not carrying out a start-up if a storage device (12) is not present can be deactivated.

2. Electrical switchgear (1) according to claim 1, **characterised in that** the control device (3) is an engine management device.

3. Electrical switchgear (1) according to claim 1 or 2, **characterised in that** the control device (3) is pre-set with default parameters for the first use and the subfunction of not carrying out a start-up if a storage device (12) is not present is deactivated.

4. Method for operating an electrical switchgear (1) having a plurality of control devices (3) which are connected to one another via a bus system (2) and which are each designed as an insert module (9) for inserting into one of a plurality of insert shafts (8) of the electrical switchgear (1), wherein depending on the design one or no storage device (12) for storing configuration data and/or operating parameters of the control device or of an electric load (6) is associated with one or a plurality of the insert shafts (8), having the following features:
a) the control devices (3) each check during each insertion operation whether or not a storage device (12) is present,
b) if a storage device (12) is present, the parameters and data stored therein are read into the associated control device (3),
c) the control device (3) has a function, which can be deactivated, of not carrying out a start-up if a storage device (12) is not present.

5. Method according to claim 4, **characterised in that** the control devices (3) start up on first use with pre-set default parameters if no storage device (12) is present, wherein the function of not carrying out a start-up if a storage device (12) is not present is deactivated.

6. Method according to claim 4 or 5, **characterised in that**, if a storage device (12) is present, the parameters and data stored therein are read into the associated control device (3), and if the function of not carrying out a start-up if a storage device (12) is not present has not yet been activated, said function is activated.

## Revendications

1. Installation (1) de distribution électrique, comprenant plusieurs appareils (3) de commande, reliés entre eux par un système (2) de bus et réalisés chacun sous la forme d'un module (9) d'enfichage à enficher dans l'un de plusieurs puits (8) d'enfichage de l'installation (1) de distribution électrique, **caractérisée en ce qu'**à un ou à plusieurs des puits (8) d'enfichage est associé un ou pas de dispositif (12) de mémorisation pour mémoriser des données de configuration et/ou des paramètres de fonctionnement de l'appareil (3) de commande ou du consommateur (6) électrique, ayant les caractéristiques suivantes :
a) les appareils (3) de commande ont chacun des premiers moyens de contrôle lors de l'opération d'enfichage dans l'un des puits (8) d'enfichage, du point de savoir si un dispositif (12) de mémorisation est associé au puits (8) d'enfichage concerné,
b) les appareils (3) de commande ont des deuxièmes moyens de réalisation d'une fonction, qui sont constitués de manière, en présence d'un dispositif (12) de mémorisation, à lire les paramètres et les données pour le fonctionnement de l'appareil (3) de commande qui y sont mémorisées et, s'il n'y a pas de dispositif (12) de mémorisation présent, une mise en marche n'est pas effectuée,
c) la fonction partielle, suivant laquelle, s'il n'y a pas de dispositif (12) de mémorisation présent, une mise en marche n'est pas effectuée, peut être désactivée.

2. Installation (1) de distribution électrique suivant la revendication 1, **caractérisée en ce que** l'appareil (3) de commande est un appareil de gestion de moteur.

3. Installation (1) de distribution électrique suivant la revendication 1 ou 2, **caractérisée en ce que**, à la première utilisation, l'appareil (3) de commande est préréglé par des paramètres normalisés et la fonction partielle, suivant laquelle s'il n'y a pas de dispositif (12) de mémorisation présent il ne se produit pas de mise en marche, est désactivée.

4. Procédé pour faire fonctionner une installation (1) de distribution électrique, ayant plusieurs appareils (3) de commande reliés entre eux par un système (2) de bus, qui sont réalisés chacun sous la forme d'un module (9) d'enfichage à enficher dans l'un de plusieurs puits (8) d'enfichage de l'installation (1) de distribution électrique, dans lequel à un ou à plusieurs des puits (8) d'enfichage est associé suivant la conception un ou pas de dispositif (12) de mémorisation pour mémoriser des données de configuration et/ou des paramètres de fonctionnement de l'appareil de commande ou d'un consommateur (6) électrique, ayant les caractéristiques suivantes :
a) les appareils (3) de commande contrôlent chacun, à chaque opération de connexion, si un dispositif (12) de mémorisation est présent ou ne l'est pas,
b) en présente d'un dispositif (12) de mémorisation, les paramètres et les données qui y sont mémorisés sont lus dans l'appareil (3) de commande associé,
c) l'appareil (3) de commande a une fonction pouvant être désactivée, suivant laquelle, s'il n'y a pas (12) de dispositif de mémorisation présent, il ne se produit pas de mise en marche.

5. Procédé suivant la revendication 4, **caractérisé en ce que** les appareils (3) de commande à la première utilisation sont mis en marche avec des paramètres normalisés réglés à l'avance, s'il n'y a pas de dispositif (12) de mémorisation, la fonction, suivant laquelle s'il n'y a pas de dispositif (12) de mémorisation présent il ne se produit pas de mise en marche, est désactivée.

6. Procédé suivant la revendication 4 ou 5, **caractérisé en ce qu'**en présente d'un dispositif (12) de mémorisation, les paramètres et données qui y sont mémorisés sont lus dans l'appareil (3) de commande associé et, si la fonction, suivant laquelle s'il n'y a pas de dispositif (12) de mémorisation présent une mise en marche n'a pas lieu n'est pas encore activée, elle est activée.
